# EUROPÄISCHE PATENTANMELDUNG

(11) **EP 1 353 493 A1**
(43) Veröffentlichungstag der Anmeldung: **15.10.2003**
(21) Anmeldenummer: 03001785.9
(22) Anmeldetag: 28.01.2003
(51) Int. Cl.: H04N 1/04

(54) **Verfahren und Vorrichtung zur Erfassung von Abtastpositionen in Druckbildern**

(30) Priorität: 09.04.2002 DE 10215548
(71) Anmelder: Eltromat Polygraph GmbH, 04442 Zwenkau (DE)
(72) Erfinder: Brauner, Ralf, 04275 Leipzig (DE); Becker, René, 06725 Profen (DE); Morgenstern, Bernd, 04159 Leipzig (DE); Nikolai, Matthias, 04451 Panitzsch (DE); Krause, Thomas, 32760 Detmold (DE)
(74) Vertreter: Schmitz, Hans-Werner, Dipl.-Ing.

(57) **Zusammenfassung**

Zur Vermeidung von Makulatur wird erfindungsgemäß ein Verfahren und eine Vorrichtung zur Erfassung von Abtastpositionen in Druckbildern vorgeschlagen, bei denen zunächst eine Masterabbildung (M) des Druckbildes erzeugt wird. Diese Masterabbildung (M) wird in definierter Ausrichtung auf ein Koordinaten feld (4) aufgelegt. Innerhalb der Masterabbildung wird die gewünschte Abtastposition manuell gekennzeichnet und die sich aus dieser Kennzeichnung ergebenden Daten der zugeordneten Koordinaten werden automatisch erfasst und abgespeichert.

## Beschreibung

Die Erfindung betrifft ein Verfahren und eine Vorrichtung zur Erfassung von Abtastpositionen in Druckbildern.

In der Druckindustrie ist es häufig erforderlich, das bedruckte Material im bewegten Zustand zu beobachten. Dafür werden unter anderem auch sehr oft Videokameras eingesetzt. Daraus ergibt sich das Problem, den interessierenden Bildausschnitt genau zu definieren und durch geeignete Mittel auf dem bewegten Produktstrom reproduzierbar aufzunehmen. In der Regel wird hierfür ein Drehgeber benutzt, der die Synchronisation mit dem laufenden Materialstrom reproduzierbar ermöglicht. Eine seitliche Zuordnung senkrecht zum Materialstrom wird durch Verfahren der Überwachungseinrichtung, wie z.B. einer Kameraanordnung, entlang einer entsprechend angeordneten Traverse erreicht. Den sich ergebenden variablen Bewegungen lassen sich beispielsweise durch Drehgeberimpulse oder Maßstäbe Koordinaten zuordnen, die ein Wiederauffinden des zu überwachenden Bildausschnittes möglich machen.

Bei bekannten Lösungen dieser Problemstellung ist beispielsweise zum Auffinden von Bildausschnitten die Kameraanordnung, die üblicherweise eine Videokamera aufweist, durch eine manuelle Fernbedienung über Taster so lange relativ zur Bahn zu bewegen, bis die richtige Koordinate quer zur Bahnlaufrichtung erreicht wird. Der richtige Zeitpunkt zur Bildaufnahme in Bahnlaufrichtung wird ebenfalls fernbedient von Aufnahme zu Aufnahme so verschoben, bis der gewünschte Bildausschnitt auf einem Monitor erscheint. Danach wird die gewünschte Größe des Bildausschnittes durch Verstellung des Zoom-Objektives so lange verändert, bis sie den Erfordernissen genügt. Bei einem weiteren bekannten Verfahren wird über eine Bildauswertung eine automatische Anpassung der Zoom-Position an die Erfordernisse der jeweiligen Überwachungsaufgabe erreicht.

Ferner sind Verfahren bekannt, bei denen durch Drucken einer Identifikationsmarke und optische Abtastung dieser Marke auf dem gedruckten Produkt mit einem geeigneten Sensor, wie beispielsweise einem Reflexionsmesskopf, ein Bezug zum Druckbogen hergestellt wird. Dies soll das Wiederauffinden einer Position in Umfangs- und/oder Seitenrichtung erleichtern und beschleunigen.

Allen diesen bekannten Verfahren ist gemeinsam, dass Bilder auf einer laufenden Bahn fortlaufend gedruckt und aufgenommen werden müssen. Dies ist insbesondere dann nachteilig, wenn erst über die Erfassung beispielsweise eines Videobildes ein Qualitätsparameter einer automatischen Steuerung oder einem so genannten Presetting zugeführt werden kann. Die Folge davon ist, dass bis zum Auffinden der richtigen Position Druckexemplare entstehen können, die nicht der Qualitätsanforderung entsprechen und damit zu Makulatur (Ausschuss) werden. Dies wiederum führt zu erheblichen wirtschaftlichen Verlusten.

Es wäre zwar grundsätzlich denkbar, dass die beschriebenen zu kontrollierenden Positionen in ihren Koordinaten vor dem Druckvorgang manuell anhand eines Masterbildes ausgemessen werden können. Bei einem solchen Vorgehen würde zwar Papier eingespart werden, jedoch würde es einen erheblichen zeitlichen und personellen Aufwand darstellen, der im praktischen Gebrauch nicht betrieben werden könnte, da hierfür eine Arbeitskraft vollständig gebunden werden würde.

Ein zu den zuvor erläuterten Problemen analoges Problem ergibt sich, wenn im laufenden Druckprozess ein lokal messendes Sensorsystem, wie beispielsweise eine Kamera, von einer Position des Druckbildes zu einer anderen bewegt werden soll. In aller Regel wird der Bedienungsperson hierbei über die Darstellung auf einem Monitor nur ein Ausschnitt des gesamten Druckbildes gezeigt. Die Bedienperson weiß dann zwar, wie die Position, an der die Messung durchgeführt werden soll, aussieht, kann sich aber nur durch ein Trial-and-Error-Verfahren, bei dem die Bedienungsperson die Bedienhandlungen anhand der jeweiligen Resultate überprüft, der neuen zu überwachenden Position von der zuvor überwachten Position wirklich nähern, wodurch sich ein erheblicher Zeitverlust und damit wiederum möglicherweise Makulatur ergibt.

Es ist daher Aufgabe der vorliegenden Erfindung, ein Verfahren und eine Vorrichtung zur Erfassung von Abtastpositionen in Druckbildern zu schaffen, die eine schnelle und zuverlässige Möglichkeit zum Auffinden einer Position in einem Druckexemplar bereitstellen.

Die Lösung dieser Aufgabe erfolgt durch die Merkmale des Anspruches 1 bzw. des Anspruches 13.

Erfindungsgemäß wird zunächst eine Masterabbildung des Druckbildes erzeugt. Die Masterabbildung kann ein Masterbogen oder Referenzbogen, eine Druckplatte oder ein Film oder eine Projektion eines nicht genau formatgerechten vorliegenden Druckmusters sein. Erfindungsgemäß ist es ebenfalls zur Erreichung gleicher Effekte möglich, eine Abbildung des Druckbogens mit elektronischen Mitteln zu erzeugen.

Wird diese Masterabbildung oder das ersatzweise erzeugte Abbild des Druckmusters in definierter Ausrichtung auf ein Koordinatenfeld aufgelegt, kann jedwede Position auf der Masterabbildung und damit dem zugeordneten Druckbogen erfasst werden.

Diese Positionsbestimmung kann beispielsweise dadurch erfolgen, dass eine Bedienperson ihren Finger an eine bestimmte Position auf der Masterabbildung bringt, deren Koordinaten dann erfasst werden.

Alternativ ist es natürlich möglich, die gewünschten Abtastpositionen durch Hilfsmittel manuell zu kennzeichnen.

Durch das erfindungsgemäße Verfahren wird es möglich, eine Positionsbestimmung ohne Bewegung der zu überwachenden Druckbahn oder eines anderen Objektes zur Definition von Positionen durchzuführen, was die eingangs erläuterten Probleme des Standes der Technik zumindestens weitgehend ausräumt.

Ferner ergibt sich der Vorteil, dass zur Positionsbestimmung steht das gesamte zu überwachende Objekt einer Bedienungsperson zur Betrachtung zur Verfügung steht, so dass jedwede Positionsbestimmungen und Eingaben stets auch unter Berücksichtigung des kompletten zu überwachenden Druckbildes getätigt werden können. Dies ist insbesondere dann wichtig, wenn mehrere gleiche Druckmuster auf ein und demselben Bogen angeordnet sind und aus dem aufgenommenen Bildausschnitt nicht erkennbar ist, welches der Druckmuster gerade beobachtet wird.

Vorzugsweise wird der zur Bildaufnahme notwendige Bezug zwischen Druckbogen und einer Maschinenposition beispielsweise dadurch hergestellt, dass die Mitte des Druckbogens bzw. der Masterabbildung und damit die Mitte der Druckbahn auf einer markierten Mitte des Koordinatenfeldes positioniert wird und der Anfang des Druckmotives immer an eine zuvor bestimmbare Stelle des Koordinatenfeldes gelegt wird.

Das erfindungsgemäße Verfahren kann sowohl zur zielgerichteten Bewegung beispielsweise einer Kamera während des Druckens eines Druckbogens verwendet werden, wie auch zur Vordefinition von Positionen im Druckbild, ohne dass dabei gedruckt werden muss.

Somit ist es erfindungsgemäß möglich, einen Druckauftrag auch bezüglich der zur Beobachtung eines Druckauftrages ausgewählten Bildposition bereits vor dem Einrichten in der Druckmaschine vorbestimmen zu können. Diese Möglichkeit spart Zeit und Material beim Einrichten eines neuen Auftrages in der Druckmaschine.

Weitere Anpassungen an unterschiedliche Anwendungsfälle sind beispielsweise dadurch möglich, dass spezielle, z.B. mit der Definition eines Bildausschnittes oder der Führung von Kameras oder anderer Sensorik im Zusammenhang stehende Funktionen, wie aber auch weitere Funktionen, die einen örtlichen Bezug zu einem Druckbogen aufweisen, berücksichtigt werden.

Dies kann beispielsweise die Verstellung von Zoom-Objektiven, der Iris (Blende) oder eines Focus wie auch eine Feinbewegung der Bildposition sein.

Die Unteransprüche haben vorteilhafte Weiterbildungen der Erfindung zum Inhalt.

Die erfindungsgemäße Vorrichtung kann beispielsweise als ein Tisch ausgebildet sein, der eine Ablage zur Aufnahme der Masterabbildungen mit einem sensiblem Koordinatenmessbereich aufweist.

Dieser Tisch kann bei einer besonders bevorzugten Ausführungsform in unterschiedliche Funktionsflächen aufgeteilt werden.

Zur Fixierung der Masterabbildung und zur Erstellung einer örtlichen Zuordnung zwischen der Masterabbildung und dem Koordinatenmesstisch kann beispielsweise ein mechanischer Anschlag dienen. Hierbei ist es grundsätzlich möglich, dass die Masterabbildung, die den Druckbogen wiedergibt, auf die Ablagefläche so aufgelegt wird, dass beispielsweise der linke Rand der Masterabbildung am Anschlag anliegt. In diesem Falle ist es möglich, dass die Unterkante der Masterabbildung an der Unterkante des aktiven Teiles des Tisches anliegend aufgelegt wird.

Ferner ist es möglich, eine Zuordnung zu einer vorhandenen Farbsteuerung in Form einer Skala am Tisch vorzusehen.

Der Tisch kann ferner einen Bereich aufweisen, in dem mehrere Bedienflächen vorgesehen sind. Jede dieser Bedienflächen kann vorzugsweise wie ein Taster wirken und kann unterschiedliche Funktionen auslösen. Solche Funktionen können z.B. mit Bezug auf eine zu steuernde Kamera, Zoom, Focus, Iris, Vorwärts/Rückwärtsbewegung, Links-/Rechtsbewegung oder ähnliches der Kamera sein. Sie können aber auch als Auswahlfunktion für Arbeitsmodi dienen. So kann beispielsweise eine Feld dazu dienen, dass die nachfolgende Bedienung im Auflagefeld bzw. Koordinatenfeld als Mittelpunkt einer Bildposition interpretiert wird, die das Ziel der Kamerapositionierung sein soll. Ein weiteres Feld kann bewirken, dass die nachfolgende Bedienhandlung im Koordinatenfeld als das Umfahren einer Fläche interpretiert wird, die als Nächstes beobachtet werden soll.

Schließlich können Felder vorgesehen sein, die bei einer Bedienung die Blende (Iris) der Kamera öffnen bzw. schließen.

Ferner ist es möglich, dass ein weiteres Feld vorgesehen ist, das Statusanzeigen über in diesem Feld eingebaute Anzeigeelemente liefert.

Bei einer besonders bevorzugten Ausführungsform ist das Koordinatenfeld von einem Rahmen umgeben, unterhalb dem beispielsweise ein Messsystem untergebracht sein kann.

Weiterhin ist es möglich, eine Verarbeitungseinheit, z.B. in Form einer intelligenten Rechnerkonfiguration vorzusehen, die die Ansteuerung und Auswertung von Sender- und Empfängerbaugruppen übernimmt und vorzugsweise die Kommunikation zu angeschlossenen Systemen, wie beispielsweise der Druckmaschine, bedient.

Im Rahmen der Erfindung ist es ebenfalls möglich, dass die Masterabbildung des Druckexemplars auf einem Bildschirm angezeigt wird und mit geeigneten interaktiven Mitteln, wie z.B. einem Touch-Screen-Aufsatz am Monitor in analoger Weise zur oben beschriebenen Vorgehensweise Positionen eingegeben werden.

Als Grundlage der Darstellung des Druckexemplars auf dem Monitor kann hierbei ein digitales Bild des Druckexemplares dienen.

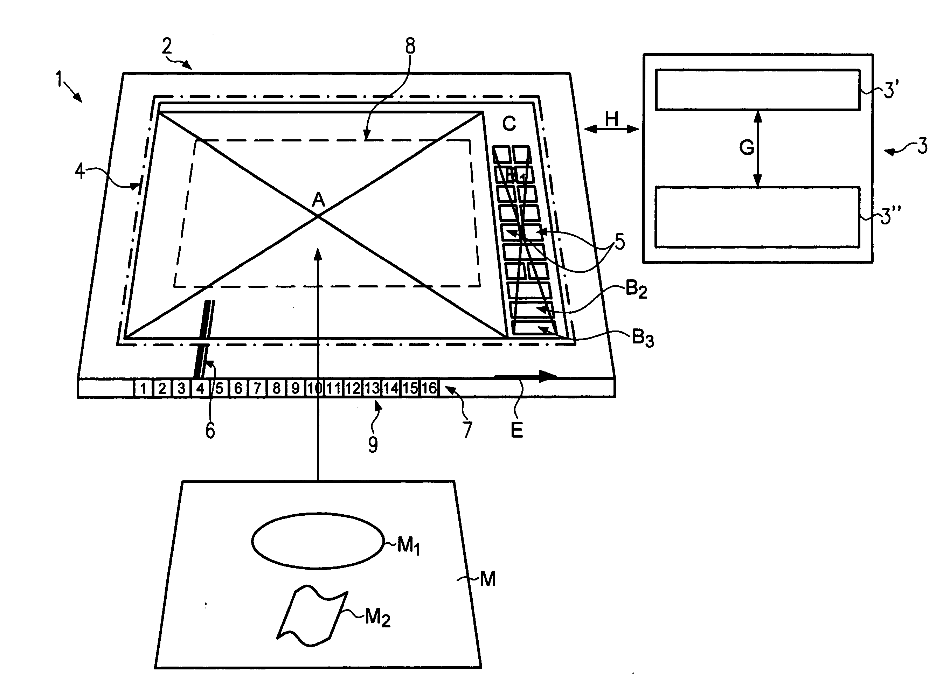

Weitere Einzelheiten, Merkmale und Vorteile der Erfindung ergeben sich aus nachfolgender Beschreibung eines Ausführungsbeispiels anhand der Zeichnung.

Die einzige Figur der Zeichnung zeigt eine schematisch stark vereinfachte Prinzipdarstellung einer erfindungsgemäßen Vorrichtung.

Die Vorrichtung 1 zur Erfassung von Abtastpositionen in Druckbildern weist im Beispielsfalle einen Tisch 2 auf, auf dem ein durch die strichpunktierte Linie 4 gekennzeichneter Koordinatenmessbereich definiert ist. Innerhalb dieses Koordinatenmessbereiches 4 ist eine Auflagefläche A vorgesehen, auf dem eine Bildvorlage bzw. eine Masterabbildung M abgelegt werden kann, die in der Figur schematisch vereinfacht dargestellt ist und im Beispielsfall zwei Bildbereiche M1 und M2 umfasst.

Die Vorrichtung 1 weist ferner ein Bedienfeld 5 auf, das eine Mehrzahl von Bedienbereichen (Tasten) umfasst, von denen beispielhaft in der Figur drei Bedienbereiche mit den Bezugsziffern B1, B2, B3 gekennzeichnet sind.

An das Bedienfeld 5 schließt sich bei der in der Figur gewählten Darstellung im oberen Bereich ein Anzeigefeld C an, das bei dieser besonders bevorzugten Ausführungsform Statusanzeigen ausgibt.

Die Vorrichtung 1 weist ferner eine Anschlageinrichtung 6 auf, die beispielsweise eine in Richtung des Pfeiles E (beispielsweise der X-Richtung entsprechend) verschiebbare Anschlagleiste F sein kann.

Der Tisch 2 weist ferner einen den Koordinatenmessbereich 4 umgebenden Rahmen 7 auf, unter dessen Ebene im Beispielsfalle eine strichliert angedeutete Messeinrichtung 8 angeordnet ist.

In der Stirnfläche des Rahmens 7 ist ferner bevorzugterweise eine Skalierung 9 vorgesehen, die beispielsweise zu einer Farbsteuerung gehören kann, die der Bedienperson als Bezug zur zonalen Aufteilung bei der Farbgebung dient.

Schließlich weist die erfindungsgemäße Vorrichtung 1 eine Rechnereinrichtung 3 auf, die mit dem Tisch 2 in Wirkverbindung steht und beispielsweise eine Verarbeitungseinheit 3' und eine bidirektionale Schnittstelle 3'' aufweist, die in Wirkverbindung miteinander stehen, was durch den Doppelpfeil G symbolisiert ist. Die Rechnereinrichtung 3 dient vor allem zur Ermittlung und Zuordnung der Koordinaten und dient mithin als Verarbeitungseinheit, die die Ansteuerung und Auswertung von beispielsweise Sender- und Empfängerbaugruppen der Messeinrichtung 8 übernimmt. Diese optionalen Zusammenhänge zwischen dem Tisch 2 und der Rechnereinrichtung 3 sind durch den Doppelpfeil H symbolisiert.

Soll eine Masterabbildung M gemäß dem erfindungsgemäßen Verfahren vermessen werden, wird diese Abbildung M auf die Auflagefläche, die eben oder zumindestens nahezu eben ist, aufgelegt. Um eine definierte Zuordnung zum Koordinatenmessbereich 4 bzw. zur Messeinrichtung 8 zu schaffen, kann in diesem Beispielsfalle die linke Kante der Masterabbildung M an der Anschlagleiste F anliegen und die Unterkante der Abbildung an der Unterkante des aktiven Teiles des Tisches 2.

Dann kann beispielsweise eine Bedienperson den Bildbereich M1 durch Anzeigen mit dem Finger oder einem Hilfsmittel, wie beispielsweise einem Anzeigestift, berühren, was die automatische Koordinatenbestimmung durch die Messeinrichtung 8 und die Weiterverarbeitung durch die Rechnereinrichtung 3 bewirkt. Diese kann beispielsweise die ermittelten Koordinaten zwischenspeichern und/oder direkt an die Druckmaschine zur Steuerung der Kamera weiterleiten. Die zeitliche Steuerung der Kamera zur Erzeugung eines stehenden Bildes erfolgt nach wie vor durch eine Synchronisierung zur Geschwindigkeit der durchlaufenden Druckbahn.

In Ergänzung zu der voranstehenden Beschreibung ist zu sagen, dass die Koordinaten-Messeinrichtung 8 als Vorrichtung ausgebildet sein kann, die aus einem über dem Tisch angeordneten Gitter von Strahlungs-Sender-Empfänger-Kombinationen besteht, die aus der Unterbrechung eines oder mehrerer Strahlen eine Ortsinformation gewinnt.

Ferner kann die Messeinrichtung als eine Vorrichtung ausgebildet sein, die aus an mindestens zwei Seiten über dem Tisch 2 angeordneten Sender-Empfänger-Kombinationen besteht, und aus der von den Sendeelementen ausgesandten, von einem innerhalb des Koordinatenmessbereichs 4 reflektierten und den Empfangselementen aufgenommenen Strahlung eine Ortsinformation zur Position des Objekts, insbesondere des Bildbereiches M1 oder M2 des Masterbildes M gewinnt.

Der Tisch 2 mit der Koordinaten-Messeinrichtung 8 kann als eine Touch-Screen-Einrichtung mit einem Monitor ausgebildet sein, auf dem das Druckbild dargestellt wird.

Als Strahlungen, die von den Sendern der Messeinrichtung 8 ausgesandt werden, ist eine IR-Strahlung oder eine Ultraschallenergiestrahlung denkbar.

Alternativ kann die Koordinatenmesseinrichtung als eine Einrichtung ausgebildet sein, die aus einem in der Oberfläche des Tisches 2 eingebauten flächigen System besteht, das die Information über den Ort einer erfolgten Berührung oder eines ausgeübten Druckes über ein Widerstandsmessverfahren (resistives Verfahren) gewinnt.

Die Rechnereinrichtung 3 kann als Personal-Computer, Mikroprozessor oder Single-Board-Computer ausgebildet sein.

Die Gesamtanordnung kann ferner eine Interface-Einheit aufweisen, die in der Figur nicht näher dargestellt ist und die einen Datenaustausch mit anderen elektronischen, ebenfalls nicht dargestellten Geräten ermöglicht.

Hierbei kann das Interface-System ein CAN-Bus-Interface sein oder das Interface kann eine RS485-Schnittstelle sein.

Der Koordinatenmessbereich 4 kann entweder den in der Figur eingezeichneten Gesamtbereich der Auflagefläche A überstreichen oder nur eine Teilfläche des Tisches 2 bzw. der Auflagefläche A.

Ferner ist es möglich, dass ein Teil des Koordinatenmessbereiches 4 als ein Feld ausgebildet ist, dessen Koordinaten einer oder mehreren anderen Funktionen zugeordnet sind. Diese Funktionen können Bedienfunktionen sein, wobei beispielsweise mindestens eine dieser Bedienfunktionen einen Bezug zur Positionierung eines Sensors über der Fläche der Masterabbildung M hat und/oder mindestens eine dieser Bedienfunktionen einen Positioniervorgang auslöst.

Dieser Positioniervorgang wiederum kann auf eine Kamera oder ein Sensorsystem wirken, das in der Zeichnung nicht näher eingezeichnet ist und in einer Druckmaschine über einer bewegten Druckbahn angeordnet wird und dort einen durch die Vorrichtung gesteuerten Teil der Bahn erfasst. Das Sensorsystem bzw. der Sensor kann in diesem Falle eine Videokamera sein, die vorzugsweise automatisch in ihrer Position entsprechend den ermittelten Daten verschoben werden kann.

Ferner ist es möglich, dass zumindestens eine der Bedienfunktionen einen definierten Betriebsmodus oder mehrere Betriebsmodi auslöst. Hierbei kann einer dieser Betriebsmodi die Interpretation einer Folge von erfassten Koordinaten zur Interpretation als Maß für die Größe und Gestalt einer Fläche erfolgen. Diese Interpretation kann beispielsweise zur Ermittlung der Kantenlänge einer rechteckigen Fläche dienen oder auch zur Ermittlung des Mittelpunktes der abzutastenden Fläche dienen. Ferner ist es möglich, dass diese Interpretation als Ermittlung des Durchmessers eines Kreises erfolgt oder der Ermittlung des Mittelpunktes einer Fläche oder des Schwerpunktes einer Fläche dient.

Als Ergebnis dieser Interpretation kann das Zoom-Objektiv einer Kamera verstellt werden.

Schließlich können die zuvor erläuterten Funktionen sofort als Positionier- und Einstellvorgänge für die Überwachungssysteme der Druckmaschine ausgenutzt werden.

Zu den Bedienfunktionen einer in der Figur nicht näher dargestellten Kamera zur Überwachung der Druckbahn, die mittels der erfindungsgemäßen Vorrichtung 1 gesteuert werden kann, ist zu sagen, dass zumindestens eine dieser Bedienfunktionen die Variation der Intensität der von den Sensoren der Messeinrichtung 8 aufgenommenen Signale verändern kann.

Hierbei können die Bedienfunktionen die Verstellung der Blende der Videokamera umfassen. Ferner ist es möglich, dass mindestens eine der genannten Bedienfunktionen die Variation des Focus einer Videokamera, die Variation des Zoom einer Kamera und/oder die Bewegung des aufgenommenen Bildes in Bewegungsrichtung des Objektives bewirkt.

Ferner kann mindestens eine der genannten Bedienfunktionen die Bewegung des aufgenommenen Bildes senkrecht zur Bewegungsrichtung des Objektives bewirken und eine weitere der genannten Bedienungsfunktionen die Auswahl von unterschiedlichen Beleuchtungsarten oder -modi bewirken.

Ferner ist es denkbar, dass eine weitere dieser Bedienfunktionen eine Auswahl der aktiven Kamera in einem Mehrkamera-System bewirkt und/oder eine Auswahl unterschiedlicher Arbeitsmodi bei der Bildschirmdarstellung erlaubt.

Ferner kann mindestens eine der Bedienfunktionen die Auswahl spezieller Auswerteverfahren, die auf das aufgenommene Bild angewandt werden, erlauben, wobei eines dieser Auswerteverfahren eine Registermarkenvermessung, ein weiteres ein Farbmessverfahren, ein weiteres eine Bar-Code-Prüfung und schließlich ein weiteres ein Bildmustervergleich sein kann.

Schließlich kann eine weitere der Bedienfunktionen das Messsystem aktivieren bzw. deaktivieren und selbst dabei aktiv bleiben.

Insgesamt ist es möglich, dass das beschriebene System erst nach Ausführen einer vordefinierten Bediensequenz in einem definierten Bereich der Koordinatenerfassungseinrichtung aktiviert wird und/oder nach Ablauf einer vordefinierten Zeit automatisch wieder inaktiv wird.

Das System kann ferner nach Abschluss einer Eingabe wieder aktiv werden und/oder nach Ablauf einer vordefinierten Zeit nach der letzten erfolgten Eingabe wieder inaktiv werden.

Schließlich ist es möglich, dass das System auch ohne Aktivierung stets intern Koordinaten ermittelt und auswertet und daraus vorzugsweise Koordinaten, die vor einer Aktivschaltung identifiziert worden sind, gesondert speichert, wobei diese Objekte ausgeblendet und nicht mehr berücksichtigt und/oder nur diese Objekte berücksichtigt werden. Ferner ist es gemäß dem erfindungsgemäßen Verfahren und der erfindungsgemäßen Vorrichtung 1 möglich, eine Unterbrechung des Strahlenganges nur dann als Koordinateneingabe zu interpretieren, wenn das unterbrechende Objekt nicht größer als eine vorgegebene Größe ist, wobei diese Größe maximal den Durchmesser eines menschlichen Fingers haben kann und/oder maximal die Größe eines zur Bedienung vorgesehenen Objektes hat. Diese Größe ist vorzugsweise nicht kleiner als eine vorgegebene Schwelle und ist bei einer besonders bevorzugten Ausführungsform nicht kleiner als der Durchmesser eines zur Bedienung vorgesehenen Objekts. Ferner können die genannten Funktionen Kalibrierfunktionen umfassen, die der Kalibrierung der Dimensionen des Messfeldes in Relation zu dem Objekt, dem die Koordinaten zugeordnet werden sollen, dienen, wobei mindestens eine Kalibrierfunktion eine seitliche Zuordnung des Objektes zum Tisch 2 bewirkt. Wie bereits erwähnt, kann die Zuordnung durch einen Anschlag, wie beispielsweise die Anschlagleiste F, erfolgen oder die seitliche Zuordnung wird mittig durch eine Markierung bewirkt.

Ferner ist es möglich, die seitliche Zuordnung durch eine mitgedruckte Marke zu bewirken, die mit einem separaten Abtastsystem auf dem bewegten Objekt automatisch gesucht wird, und die gefundene Position über die Interface-Einheit an die erfindungsgemäße Vorrichtung 1 übergibt, die diese Position speichert und die Eingabe derselben Markenposition am auf dem Tisch 2 positionierten Objekt der Koordinatenmesseinrichtung 8 als Bezug zuordnet.

Ferner ist es möglich, dass die seitliche Zuordnung durch Abtastung der bewegten Bahn mit einer Kamera und einem nachgeschalteten Bildverarbeitungssystem bestimmt wird, indem das System eine Bildmusteranalyse durchführt und daraus die Position des abzutastenden Objekts ermittelt, die gefundene Position über die Interface-Einheit an die erfindungsgemäße Vorrichtung 1 übergibt und durch die Eingabe derselben Markenposition am auf dem Tisch 2 positionierten Objekt unter Nutzung der Vorrichtung 1 dem Koordinatensystem 1 zuzuordnen.

Als Kalibrierfunktion kann ferner eine Zuordnung des Objektes zum Tisch 2 in Bewegungsrichtung vorgesehen sein, wobei die Zuordnung in Bewegungsrichtung durch einen mechanischen Anschlag für die Positionierung des Musterobjektes erreicht wird. Hierbei kann die Zuordnung in Umfangsrichtung durch separate manuelle Eingabe einer Referenzposition erreicht werden, die bei jeder Koordinatenermittlung durch den Rechner 3 berücksichtigt wird.

Die Zuordnung in Bewegungsrichtung kann hierbei durch eine mitgedruckte Marke erfolgen, die mit einem separaten Abtastsystem auf dem bewegten Objekt automatisch gesucht wird und die gefundene Position über die Interface-Einheit an die erfindungsgemäße Vorrichtung übergibt, die diese Position speichert und durch die Eingabe derselben Markenposition am auf dem Tisch 2 positionierten Objekt der Koordinaten-Messeinrichtung 8 als Bezug zuordnet. Alternativ ist es möglich, die Zuordnung in Umfangsrichtung durch Abtastung der bewegten Bahn mit einer Kamera und einem nachgeschalteten Bildverarbeitungssystem zu bestimmen, indem das System eine Bildmusteranalyse durchführt und daraus die Position des abzutastenden Objektes ermittelt, die gefundene Position über die Interface-Einheit an die Vorrichtung 1 übergibt und durch die Eingabe derselben Markenposition am auf dem Tisch 2 positionierten Objekt der Koordinaten-Messeinrichtung 8 zuordnet.

Ferner ist es möglich, dass zumindestens eine Kalibrierfunktion vorgesehen ist, die eine Skalierung des Tisches 2 erlaubt, wobei die Skalierung dadurch erfolgen kann, dass das Objekt auf dem Tisch 2 aufgelegt ist, die Funktion Kalibrierung ausgewählt wird, z.B. nacheinander die linke untere und die rechte obere Ecke des Objektes mit der beschriebenen Einrichtung eingegeben wird, das System die eingegebenen Werte mit eventuell bereits vorhandenen Formatangaben vergleicht und eine entsprechende Lagezuordnung und, falls notwendig, eine maßstäbliche Umrechnung des Objektes vornimmt.

Ferner ist es möglich, dass mindestens eine Funktion vorgesehen ist, die automatisch erkennt, wenn ein Objekt in einem veränderten Format als Masterbild M aufgelegt wird und daraus die Aufforderung zur Einleitung eines neuen Skaliervorganges einleitet. Diese Formatänderung kann aus der Auswertung der permanent aufgenommenen Koordinatensignale von dem Teil des Tisches 2 abgeleitet werden, der zur Auflage des Objektes bzw. der Masterabbildung bestimmt ist. Ferner kann diese Formatänderung durch einen zusätzlichen Bildsensor mit Auswerteeinheit erfolgen, der oberhalb des Tisches 2 angebracht ist. Alternativ ist es ferner möglich, dass diese Formatänderung durch zusätzliche im Tisch 2 angebrachte Sensoren mit nachgeschalteter Auswerteeinheit erkannt wird.

Erfindungsgemäß ist es ferner möglich, eine Einbindung einer Farbsteuerung vorzunehmen, wobei die Koordinatenmessfläche bzw. der Koordinatenmessbereich 4 in ihren Koordinaten senkrecht zur Bewegungsrichtung der Druckbahn gleichermaßen den Koordinaten "Farbsteuerung" zugeordnet ist, die eine Einstellung eines Farbgebungsprofiles senkrecht zur Bewegungsrichtung erlaubt, wobei diese Bedienfunktionen Farbsteuerfunktionen sein können, die zonale Steuerfunktionen in einer Offsetdruckmaschine darstellen und zumindestens aus einer Plus- und einer Minusfunktion bestehen, die zonale Erhöhung oder eine Verringerung der Farbförderung bewirken.

Ferner können Farbsteuerbedienelemente vorgesehen sein, die in ihrer örtlichen Zuordnung einen hinreichend genauen Bezug zum auf dem Tisch 2 angeordneten Objekt bzw. der Masterabbildung M haben und eine Veränderung in dem Streifen bewirken, der dem Bedienelement zugeordnet worden ist. Ferner können weitere Bedienelemente vorgesehen sein, die andere Farbsteuerfunktionen ohne eine örtliche Zuordnung auslösen können. Schließlich sind Bedienelemente denkbar, die eine Auswahl eines gewünschten Druckwerkes erlauben.

Erfindungsgemäß ist es schließlich möglich, eine Touch-Screen-Einrichtung vorzusehen, die eine bildhafte Darstellung des ebenen Objektes ermöglicht, dem die entsprechenden Zuordnungen und Funktionalitäten, die zuvor beschrieben worden sind, unterlegt werden. Hierbei ist es denkbar, dass das auf dem Bildschirm dargestellte Objekt aus den Farbauszügen eines sogenannten "Preview-Image des CIP3-Files" gewonnen worden ist. Ferner ist es denkbar, dass das auf dem Bildschirm dargestellte Objekt in einem anderen Datenformat als Farbbild zur Verfügung gestanden hat oder das Bild aus einem komprimierten File durch Umrechnen gewonnen worden ist.

Ferner ist es denkbar, dass das Bild als selektiertes Teilbild auf einem Monitor dargestellt wird und die Zuordnung zu den Positionen des Gesamtbildes entsprechend aus der Position innerhalb des Teilbildes und dessen Position innerhalb des Gesamtbildes errechnet werden.

Ein Koordinatennetz kann auf dem Bildschirm dem Bild überlagert eingeblendet werden wie auch ein Zonenraster einer Farbsteuerung dem Bild überlagert eingeblendet werden kann. Schließlich ist es möglich, die Bedienung auf dem Touch-Screen mit einem speziellen Griffel durchzuführen, der eine sehr genaue Positionseingabe erlaubt.

## Patentansprüche

1. Verfahren zur Erfassung von Abtastpositionen in Druckbildern mit folgenden Verfahrensschritten:
- Erzeugen einer Masterabbildung (M) des Druckbildes;
- Auflegen der Masterabbildung (M) in definierter Ausrichtung auf ein Koordinatenfeld;
- manuelles Kennzeichnen zumindest einer Abtastposition;
- automatisches Erfassen der Koordinaten der **gekennzeichneten** Abtastposition; und
- Abspeichern der Koordinaten.

2. Verfahren nach Anspruch 1, **gekennzeichnet durch** den Verfahrensschritt des Weiterleitens der gespeicherten Koordinaten an eine Überwachungseinrichtung, insbesondere eine Videokamera, einer Druckmaschine zu deren Positionssteuerung.

3. Verfahren nach Anspruch 1 oder 2, **gekennzeichnet durch** den Verfahrensschritt des manuellen Kennzeichnens eines Bildausschnittes des Masterbildes (M) **durch** Umfahren der **gekennzeichneten** Abtastpositionen.

4. Verfahren nach einem der Ansprüche 1 bis 3, **gekennzeichnet durch** den Verfahrensschritt des Auslösens einer Positionierung der Überwachungseinrichtung während des Druckvorganges.

5. Verfahren nach einem der Ansprüche 1 bis 3, **gekennzeichnet durch** den Verfahrensschritt des Positionierens der Überwachungseinrichtung vor dem Druckvorgang.

6. Verfahren nach einem der Ansprüche 1 bis 5, **dadurch gekennzeichnet, dass** die Mitte der Masterabbildung auf der Mitte des Koordinatenfeldes angeordnet wird.

7. Verfahren nach einem der Ansprüche 3 bis 6, **dadurch gekennzeichnet, dass** die durch das Umfahren der **gekennzeichneten** Abtastposition gewonnenen Koordinaten zur Berechnung und Betätigung einer Zoom-Funktion der Überwachungseinrichtung verwendet werden.

8. Verfahren nach einem der Ansprüche 1 bis 7, **dadurch gekennzeichnet, dass** dem durch die gewonnenen Koordinaten erzeugten Bild Auswertefunktionen, insbesondere Barcodeauswertung, Registermarkenvermessung, Farbmessung, Bildmustervergleich, zugeordnet werden.

9. Verfahren nach einem der Ansprüche 1 bis 8, **dadurch gekennzeichnet, dass** vor Durchführung der Koordinatenerfassung ermittelte Daten als Fehldaten interpretiert und ausgesondert werden.

10. Verfahren nach einem der Ansprüche 1 bis 9, **dadurch gekennzeichnet, dass** im Zuge der Koordinatenerfassung ein Kalibrierungsvorgang durch Nullpunktdefinition im Koordinatenfeld ausgeführt wird, bei dem das Koordinatenfeld für die Masterabbildung mit dem Druckmaschinen-Koordinatenfeld zur Deckung gebracht wird.

11. Verfahren nach einem der Ansprüche 1 bis 10, ferner **gekennzeichnet durch** eine Kalibrierung, bei der eine Skalierung derart durchgeführt wird, dass die Masterabbildung auf das Koordinatenfeld aufgelegt wird, die Funktion "Kalibrierung" ausgewählt wird und nacheinander die linke untere und die rechte obere Ecke der Masterabbildung eingegeben wird, wobei die eingegebenen Werte mit vorzugsweise bereits vorhandenen Formatangaben verglichen und eine entsprechende Lagezuordnung im Bedarfsfalle eine maßstäbliche Umrechnung der Masterabbildung vornimmt.

12. Verfahren nach einem der Ansprüche 1 bis 11, **dadurch gekennzeichnet, dass** die Masterabbildung ein Masterbogen, ein Referenzbogen, eine Druckplatte, ein Film, eine Projektion oder eine elektronische Abbildung des Druckbildes oder mindestens ein Teil der vorgenannten Masterabbildungen ist.

13. Vorrichtung (1) zur Erfassung von Abtastpositionen in Druckbildern
- mit einer zumindest nahezu ebenen Auflagefläche (A) für zumindestens eine Masterabbildung (M) oder eines Teiles der Masterabbildung (M) des Druckbildes;
- mit einer der Auflagefläche (A) zugeordneten Messeinrichtung (8) zur Erzeugung von Koordinaten von zu kennzeichnenden Positionen in der Masterabbildung (M) entsprechend dem dieser **gekennzeichneten** Position entsprechenden Punkt der Auflagefläche (A);
- mit einer Anschlageinrichtung (6, 11) zur definierten Ausrichtung der Masterabbildung (M) relativ zur Messeinrichtung (8); und
- mit einer Rechnereinrichtung (3) zur Verarbeitung der Daten der gewonnenen Koordinaten.

14. Vorrichtung nach Anspruch 13, **dadurch gekennzeichnet, dass** die Auflagefläche (A) Teil eines Tisches (2) ist und der Tisch (2) einen Koordinatenmessbereich (4) aufweist.

15. Vorrichtung nach Anspruch 13 oder 14, **dadurch gekennzeichnet, dass** der Tisch (2) einen den Koordinatenmessbereich (4) umgebenden Rahmen (7) aufweist, unterhalb dessen Ebene die Messeinrichtung (8) angeordnet ist.

16. Vorrichtung nach einem der Ansprüche 13 bis 15, **dadurch gekennzeichnet, dass** der Tisch (2) mindestens ein Bedienfeld (5) und/oder mindestens ein Anzeigefeld (C) aufweist.

17. Vorrichtung nach Anspruch 16, **dadurch gekennzeichnet, dass** das Bedienfeld (5) nach Art einer Touch-Screen ausgebildet ist.

18. Vorrichtung nach einem der Ansprüche 13 bis 17, **dadurch gekennzeichnet, dass** die Messeinrichtung (8) in der Ebene der Auflagefläche (A) oder oberhalb der Ebene der Auflagefläche (A) angeordnet ist.

19. Vorrichtung nach einem der Ansprüche 13 bis 18, **dadurch gekennzeichnet, dass** die Anschlageinrichtung (6) als verschiebbare Anschlagleiste (F) ausgebildet ist.

20. Vorrichtung nach einem der Ansprüche 13 bis 19, **gekennzeichnet durch** eine Skalierung (9) zur Farbsteuerinformation.

21. Vorrichtung nach einem der Ansprüche 13 bis 20, **dadurch gekennzeichnet, dass** die Rechnereinrichtung (3) als Personal Computer, Mikroprozessor oder Single-Board-Computer ausgebildet ist.

22. Vorrichtung nach einem der Ansprüche 13 bis 21, **dadurch gekennzeichnet, dass** die Rechnereinrichtung (3) mit einer Überwachungseinrichtung, vorzugsweise in Form einer Videokamera, der das Druckbild erstellenden Druckmaschine in Wirkverbindung steht.
